# EUROPEAN PATENT SPECIFICATION

(11) **EP 0 614 785 B1**
(45) Date of publication and mention of the grant of the patent: **27.11.1996**
(21) Application number: 94300795.5
(22) Date of filing: 03.02.1994
(51) Int. Cl.: B60R 21/16

(54) **Passenger side air bag with controlled deployment**
Beifahrerluftsack mit gesteuerter Entfaltung
Sac gonflable côté passager à déploiement contrôlé

(30) Priority: 11.03.1993 US 29690; 02.04.1993 US 42122
(43) Date of publication of application: 14.09.1994
(73) Proprietor: MORTON INTERNATIONAL, INC., Chicago Illinois 60606-1596 (US)
(72) Inventor: Gunn, Brian D., Ogden Utah 84401 (US); Dyer, David J., Kaysville Utah 84037 (US); Harris, Bradley D., Farmington Utah 84025 (US); Folsom, Marc D., Salt Lake City Utah 84109 (US); Smith, Bradley W., Ogden Utah 84401 (US)
(74) Representative: Bankes, Stephen Charles Digby

(56) References cited:
- EP-A- 0 344 422
- EP-A- 0 495 409
- DE-A- 2 944 319
- US-A- 3 586 347
- US-A- 5 022 675

## Description

The invention herein refers to a vehicle air bag and more particularly to a passenger's side vehicle air bag adapted to deploy in a controlled manner.

Many modern vehicles incorporate one or more inflatable air bags for the protection of occupants in the event of a crash. The air bags are mounted in a folded, compact condition in conjunction with a gas generator, and upon sensing of a vehicle crash, the gas generator produces inflation gas which rapidly deploys and inflates the air bag.

The passenger side air bag is typically mounted in the dashboard and deploys toward the passenger as the passenger experiences relative motion toward the windshield, dashboard and deploying air bag. The thrust or main axis of deployment of the air bag is directly toward the passenger, and the material of the air bag initially forms an elongated column, the end of which may strike the driver, sometimes in the face, occasionally resulting in abrasions. Additionally, if the passenger's head is decelerated by the air bag while the passenger's torso is moving forward, the passenger can experience a whip lash motion. A further consideration is for small passengers and children who, if they do not impede against the air bag as it initially deploys, may slip under it and be less than fully protected.

The foregoing difficulties are exacerbated in vehicles mounting the air bag on an upwardly angled dashboard surface, whereby initial deployment is more upward than outward toward the passenger's torso.

U.S. Patent 5022675 discloses a vehicle air bag in which elongate fabric tethers are provided for modifying the final inflated shape of the air bag. The tethers are only tensioned, and thereby effect the shape of the air bag, when the air bag has been substantially completely inflated.

German Patent 2944319, on which the pre-characterising portion of claim 1 is based, discloses a vehicle air bag in which a lateral row of break-away stitching extends completely across the air bag so as to prevent inflating gas from entering a lower portion of the air bag during an initial stage of inflation. European patent 0 495 409 discloses a similar arrangement in which break-away stitching is provided in two vertically disposed rows.

Accordingly, one design objective for passenger side air bags is to limit the extent of outward deployment prior to full inflation and to encourage a vertically elongated frontal surface in early deployment of the passenger side air bag.

It is known in the prior art to provide air bags with internal tether straps to restrain the range of initial deployment toward the passenger. Two to four anchored tether straps or webs have their ends secured to the front panel of the air bag to limit the extent of deployment of the front panel toward the passenger. The tether strap system, although efficient in limiting the extent of deployment, has some drawbacks of its own. The tether straps add concentrated points of mass to the front panel, and this additional mass in part increases the likelihood of possible abrasions in that more kinetic energy is developed and imparted to the passenger if the air bag reaches the passenger. The tether straps also cause stress concentration at the attachment points, thereby requiring additional reinforcement to prevent failure of the air bag. Further, the tether straps add bulk and weight to the air bag module when it is desirable to keep the module as light in compact as possible for mounting in the dash. The tether strap system also has little effect upon the direction of deployment of the air bag, and encourages formation of a vertically elongated front only after outward deployment to the extent of the tether straps has occurred.

Accordingly, there is need for better control in the deployment of a passenger's side air bag while retaining simplicity and reliability in the manufacturing and operation thereof.

An object of the invention herein is to provide a vehicle occupant restraint system including an improved air bag for protecting the occupant of a vehicle in a crash.

Another object of the invention is to provide an improved air bag which is particularly well adapted for mounting in the vehicle dashboard on the passenger side of the vehicle.

A further object of the invention is to provide an air bag which exhibits controlled deployment.

An additional object of the invention is to provide an air bag which forms a vertically elongated front surface prior to full inflation of the air bag.

It is another object of the invention to provie an air bag which exhibits controlled deployment with a minimum bulk and weight.

It is also an object of the invention to provide an air bag which exhibits ease of manufacture and reliability in operation.

In accomplishing these and other objects of the invention, there is provided a vehicle occupant restraint system for mounting in a vehicle dashboard in front of a passenger position, the restraint system comprising:
a) an air bag defining an inlet opening and which, when inflated, provides a vertically elongated front surface; b) the air bag, when inflated, including a depending lobe extending downwardly with respect to the vehicle dashboard, a front surface of the depending lobe forming a portion of the vertically elongated front surface of the air bag, and a rear surface of the depending lobe extending from the inlet opening to a bottom of the depending lobe; c) means releasably connecting and securing an inside of a portion of the air bag defining the vertically elongated front surface to the inside of a portion of the air bag defining the rear surface of the depending lobe; and (d) means connected to the air bag at the inlet opening, for providing inflation gas;
characterised in that the releasable securing means permit inflation gas to flow to the depending lobe prior to release of the releasable securing means whereby the releasable securing means limits outward deployment of the vertically elongated front surface of the air bag during initial inflation of the air bag and releases upon partial deployment and inflation of the air bag. When fully inflated, the air bag forms a vertically elongated front surface for extending to the passenger's lap area, the vertically elongated front surface being partially formed by a lobe depending below the dashboard from the inlet opening, the depending lobe also having a rear surface extending toward the inlet opening. A portion of the air bag defining front surface is releasably secured to a portion of the air bag defining the rear surface of the depending lobe. Upon initial deployment and partial inflation of the air bag, outward deployment of the upper portion of the verticlaly elongated front surface is limited because of the front surface attachment to the rear of the depending lobe. Thereafter the releasable securement separates and the lower portion of the vertically elongated front surface forms. This provides formation of the verticlaly elongated front surface of the air bag relatively early in the deployment and inflation process, which then proceeds with the air bag shaped in a desired configuration. Due to the fact that passage of initial inflation gas to the depending lobe prior to separation of the releasable securement is possible the lower portion of the air bag deploys and partially inflates.

According to a further aspect of the invention, the front panel and rear panel of the depending lobe are secured together by breakaway stitching. More aspects of the invention are in providing reinforcement patches within which the stitching is deployed, and in providing the stitching in parallel vertical lines.

A particular aspect of the invention is in providing a stitch density in the area of stitching which first separates which is higher than the stitch density in the area of stitching which subsequently separates. The stitching is advantageously provided in elongated converging lines, with greater lateral spacing in the area of first separation and with additional short stitch line segments interspersed between the elongated lines in the area of first separation to provide the higher stitch density.

According to another aspect of the invention, the air bag comprises a central panel and two substantially identical side panels each having a depending lobe, each side panel having its marginal edge secured to a respective edge of the central panel to provide an air bag defining an inlet opening, the central panel extending from the inlet opening along the top edges of the side panels to the front edges of the side panels, along the front edges of the side panels, including the front edges of the depending lobes of the side panels, thereby providing a frontal surface of the air bag, and along the rear edges of the depending lobes of the side panels and to the inlet opening. In connection with this aspect of the invention, a portion of the central panel between the front edges of the lobes is releasably secured to a portion of the central panel between the rear edges of the lobes. More particularly, the secured portions are less than one-half the width of the front panel and rear panel of the depending lobe.

The various features of novelty which characterize the invention are pointed out with particularity in the claims annexed to and forming a part of this specification. For a better understanding of the invention, its operating advantages, and specific objects attained by its use, reference is made to the accompanying drawings and descriptive matter in which a preferred embodiment of the invention is illustrated.
Fig. **1** illustrates a passenger side air bag according to the invention herein shown schematically in an early stage of deployment from the dashboard of a vehicle;
Fig. **2** illustrates the air bag of Fig. **1** shown schematically in an intermediate stage of deployment and inflation;
Fig. **3** illustrates the air bag of Fig. **1** shown schematically fully deployed and inflated;
Fig. **4** is a fragmentary front elevation view of the air bag of Fig. **1**;
Fig. **5** is a sectional view of the air bag of Fig. **1**, taken along the lines **5-5** of Fig. **4**;
Fig. **6** is a side elevation view of the air bag of Fig. **1** in an early stage of deployment and inflation;
Fig. **7** is a front elevation view of the air bag of Fig. **1** in the same stage of deployment and inflation as shown in Fig. **6**;
Fig. **8** is a side elevation view of the air bag of Fig. **1** in a later stage of deployment and inflation;
Fig. **9** is a front elevation view of the air bag of Fig. **1** in the same stage of deployment and inflation as shown in Fig. **8**;
Fig. **10** is a side elevation view of the air bag of Fig. **1** in a later stage of deployment and inflation;
Fig. **11** is a front elevation view of the air bag of Fig. **1** in the same stage of deployment and inflation as shown in Fig. **10**;
Fig. **12** is a side elevation view of the air bag of Fig. **1** in a later stage of deployment and inflation;
Fig. **13** is a front elevation view of the air bag of Fig. **1** in the same stage of deployment and inflation as shown in Fig. **12**;
Fig. **14** is a side elevation view of the air bag of Fig. **1** in a later stage of deployment and inflation;
Fig. **15** is a front elevation view of the air bag of Fig. **1** in the same stage of deployment and inflation as shown in Fig. **14**;
Fig. **16** is a side elevation view of the air bag of Fig. **1** in a later stage of deployment and inflation;
Fig. **17** is a front elevation view of the air bag of Fig. **1** in the same stage of deployment and inflation as shown in

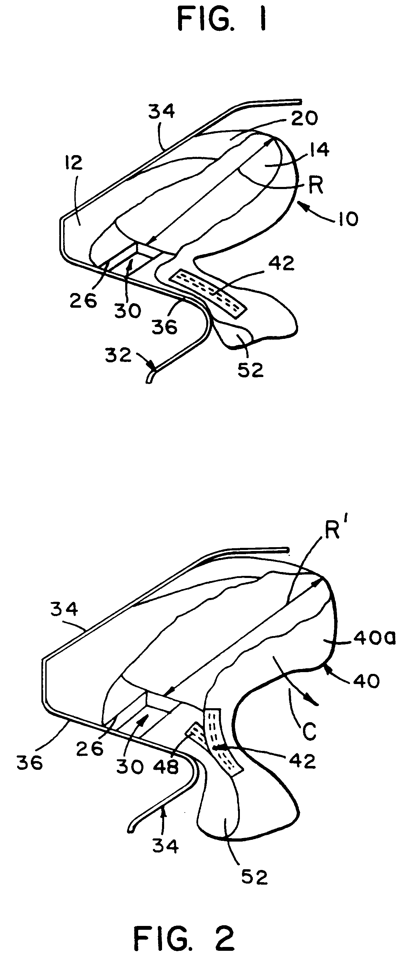

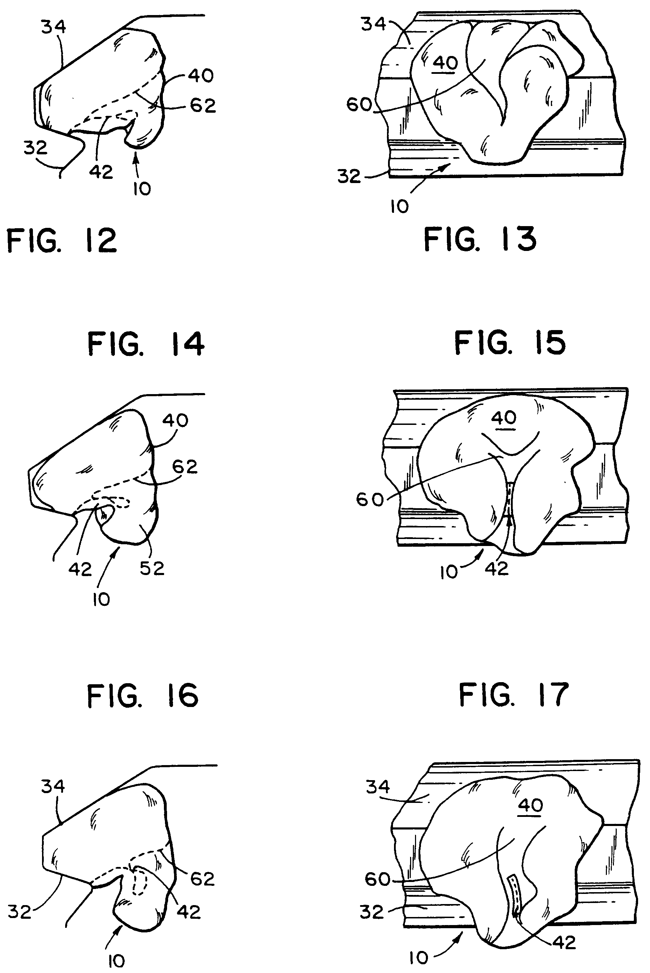

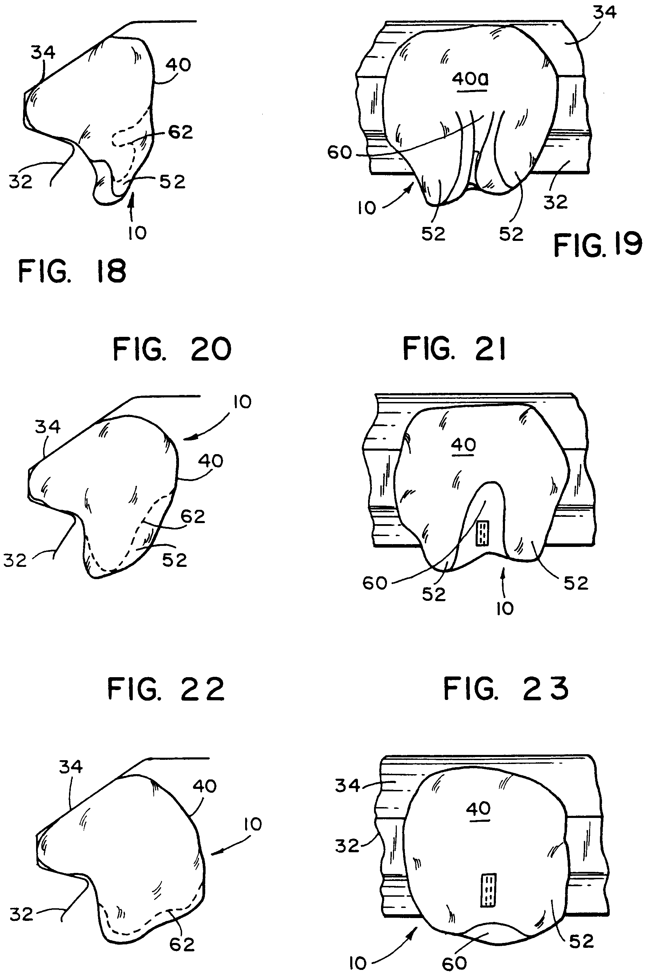

Fig. **16**; Fig. **18** is a side elevation view of the air bag of Fig. **1** in a later stage of deployment and inflation;
Fig. **19** is a front elevation view of the air bag of Fig. **1** in the same stage of deployment and inflation as shown in Fig. **18**;
Fig. **20** is a side elevation view of the air bag of Fig. **1** in a later stage of deployment and inflation;
Fig. **21** is a front elevation view of the air bag of Fig. **1** in the same stage of deployment and inflation as shown in Fig. **20**;
Fig. **22** is a side elevation view of the air bag of Fig. **1** in a later stage of deployment and inflation;
Fig. **23** is a front elevation view of the air bag of Fig. **1** in the same stage of deployment and inflation as shown in Fig. **22**;

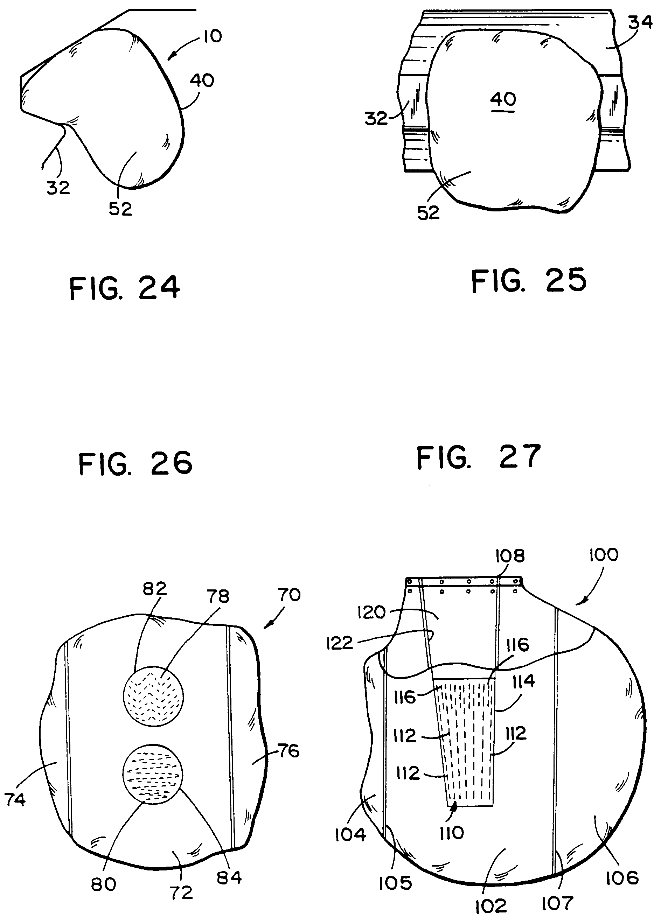

Fig. **24** is a side elevation view of the air bag of Fig. **1** in a later stage of deployment and inflation;
Fig. **25** is a front elevation view of the air bag of Fig. **1** in the same stage of deployment and inflation as shown in Fig. **24**;
Fig. **26** is a fragmentary front elevation view of another air bag according to the invention herein; and
Fig. **27** is a fragmentary front elevation view of another air bag according to the invention herein.

The same reference numerals refer to the same elements throughout the various figures.

Figures **1-5** depict an air bag **10** according to the invention herein. The air bag **10** is well suited for use on the passenger side of the vehicle, and is designed for controlled deployment and inflation in which a vertically elongated frontal surface is achieved relatively early in the deployment and inflation process. Such deployment is achieved even from a "top mount" position, i.e., in a dashboard angled upwardly.

Also schematically shown in Figs. **1-3** (and other figures as well) are the dashboard **32** and windshield **34** of a vehicle in which the air bag **10** is used. The dashboard **32** is of the type having a top panel **36** angled to face substantially upwardly toward the windshield **34**, with the inflator module and storage compartment **30** being mounted in the top panel **36**. This is referred to as a "top mount" air bag installation.

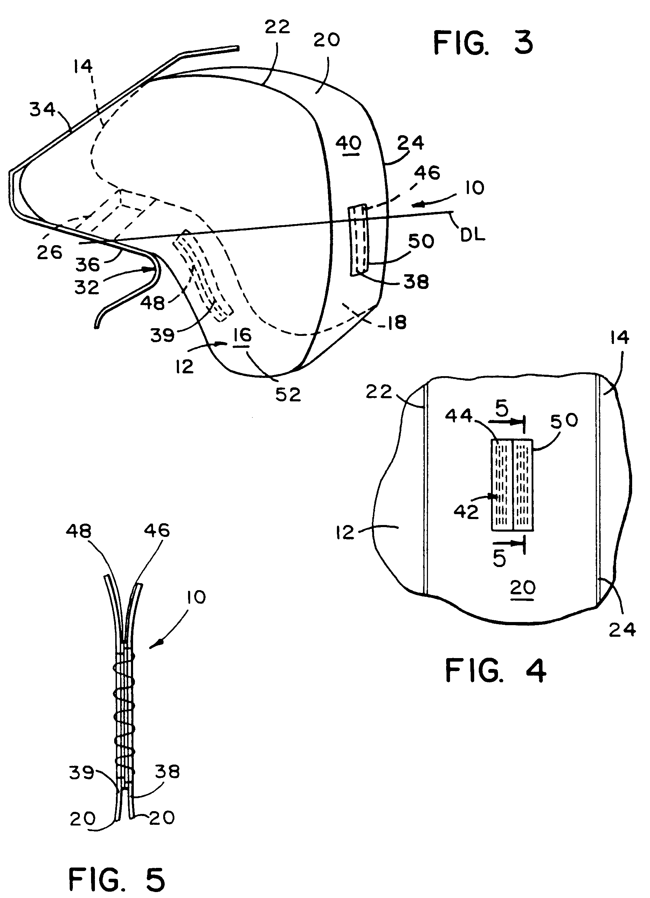

With particular reference to Fig. **3**, in which the air bag **10** is illustrated fully deployed and inflated, the air bag **10** comprises substantially identically shaped side panels **12** and **14,** side panel **14** being shown in dotted lines. The side panels **12** and **14** include depending lobe portions **16** and **18**, respectively. The air bag **10** further comprises a central panel **20** secured to the side panels **12** and **14** at seams **22** and **24,** respectively. The air bag **10** defines an inlet opening at **26**, where the air bag **10** is connected to an inflator module and storage compartment **30**, as is well known in the art and is therefore shown only schematically in the drawings. The depending lobe portions **16**, **18** of the side panels extend downwardly from the inlet opening and are below the line DL in Fig. **3**.

With continued reference to Fig. **3**, when the air bag **10** is fully deployed and inflated, the central panel **20** extends from the inlet opening **26** along the top edges of the side panels **12** and **14**, a portion of which lie near or against the windshield **34**. The central panel **20** also extends along a vertically elongated front surface **40** of the air bag **10**, which is in part defined between the depending lobes **16** and **18** of the side panels **12** and **14**. The central panel **20** continues along the rear edges of the depending lobes to return to the inlet opening **26**. The fabric for the side panels and central panel is 49 x 49 nylon, and the air bag **10** as heretofore described is substantially the same as is known in the prior art and accordingly may be fabricated readily by one skilled in the art.

The air bag **10** is further characterized by a releasable securement of a portion **38** of the central panel **40** between the front edges of the depending lobes of the side panels with a portion **39** of the central panel **40** between the rear edges of the depending lobes of the side panels. In air bag **10** this is accomplished by breakaway stitching **42** applied to a reinforced portion of the central panel. As best seen in Fig. **4**, the stitching **42** is provided in eight parallel lines aligned with the seams **22** and **24** joining the central panel **20** with the side panels **12** and **14**. The ends **44** of the stitching **42** nearest the inlet opening prior to release of the stitching are back stitched to resist initially and thereby delay separation of the joined portions of the front panel **20**. Each of the eight stitch lines is nine inches long, and the stitches are applied with 41 Kg (90 lb) nylon thread at approximately three stitches per cm (8 stitches/in).

With reference to Fig. **5**, the central panel **20** is reinforced in the area of the stitching by two patches **46** and **48.** Patch **46** is secured to the portion **38** of the front panel which is part of the vertically elongated frontal surface **40,** and reinforcing patch **48** is secured to the portion **39** of the front panel **20** which is part of the rear of the depending lobe. The reinforcing patches are rectangular and are secured to the front panel by stitching **50.**

The stitching **42** connects only a central portion of the central panel **20** together, and inflation gas is free to pass on either side of the stitching **42** into the depending lobe region of the air bag **10** during early deployment and inflation of the air bag **10.**

It will be appreciated that the pattern of stitching, the amount of stitching, the strength of the thread used to apply the stitches and the number of stitches per inch may be varied to achieve the desired operating parameters of an air bag in a particular installation with its specific requirements. Thus, although the disclosure of the specific stitching set forth above is applicable to the air bag **10** comprising the preferred embodiment of the invention and achieve desired operational results, as more fully discussed below, the invention herein is not limited to that particular specific stitching.

With reference to Figs. **1-3,** the deployment and inflation of the air bag **10** is illustrated schematically. With reference to Fig. **1,** the air bag **10** is in a relatively early stage of deployment and inflation. Prior thereto, the air bag was folded for storage in the inflation module **30** mounted under a breakaway portion of the dashboard panel **36.** The inflation module **30** includes a gas generator (not shown) which is activated upon sensing of a collision to produce inflation gas rapidly. Filling and expansion of the air bag **10** opens the breakaway portion of the dashboard and the air bag **10** is freed to deploy and inflate. The inflator module **30,** the breakaway dashboard and the initial operation of the inflator module and air bag are well known to those skilled in the art, and accordingly are not shown and described in greater detail herein. The invention herein relates more particularly to the shaping of the air bag **10** by the releasable securement during deployment and inflation after the inflation process has begun.

With continued reference to Fig. **1,** the air bag **10** deploys upwardly along the windshield **34** and outwardly toward the passenger, not shown. The upward and outward deployment is in part a function of the top mount of the inflator module in panel **36** of dashboard **32,** wherein a column of inflation gas is directed substantially upwardly and outwardly, rather than outwardly alone. However, the outward deployment of the air bag **10** is inhibited by the stitching **42,** which limits the amount of the central panel **20** which is available for outward extension. The extension is illustrated in Fig. **1** by the line R, and it can be seen that the stitching **42** limits the amount of the center panel **20** available for extension.

Because the outward deployment of the air bag **10** is limited, lateral expansion of the air bag **10** is encouraged, i.e., the column of inflation gas is deflected and diverted laterally. Further, inflation gas also flows past the stitches **42,** on either side thereof, and begins inflation of the lower portion of the depending lobe of air bag **10,** indicated at **52** in Fig. **1**.

With reference to Fig. **2**, the deployment and inflation of air bag **10** has continued, characterized by partial separation of stitches **42.** The separation occurs primarily because of the forward momentum and kinetic energy of the air bag material. When the air bag **10** has deployed to the limit created by the stitching, the kinetic developed by the deploying air bag material in effect "jerks" the stitching and causes the stitching to separate. Thus, the separation is not caused by pressure of inflation gases within the bag, but instead by the deployment process.

Because of the restraint provided by stitching **42**, the inflation gases tend to fill out the air bag **10** rather than to drive the air bag **10** in an elongated column. Thus, the air bag **10** begins to develop a vertically elongated frontal surface **40** relatively early in the deployment and inflation process, with a downwardly forming portion of the vertically elongated frontal surface **40** being indicated at **40a** in Fig. **2**. The line R' is shown in Fig. **2** to indicate the direction and extent of furthest deployment of the air bag. With respect to the line R in Fig. **1**, the line R' is only marginally larger despite continuing inflation, and is rotated downwardly. The cured arrow C in Fig. **2** indicates the progression of the formation of the elongated frontal surface **40** and the air bag **10** exhibits this deployment rather than further outward deployment along the line R'. The bottom portion **52** of the depending lobe of air bag **10** has also achieved greater inflation.

With reference to Fig. **3**, the air bag **10** is shown schematically fully deployed. The stitching **42** is fully separated, leaving the patches **46** and **48** also separated and attached to the respective portions **38, 39** of the deployed depending lobe **52.** The vertically elongated frontal surface **40** extends downwardly below the dashboard **32,** such that it receives the passenger over its entire length and, in particular, provides a vertical surface for protecting a short passenger or child.

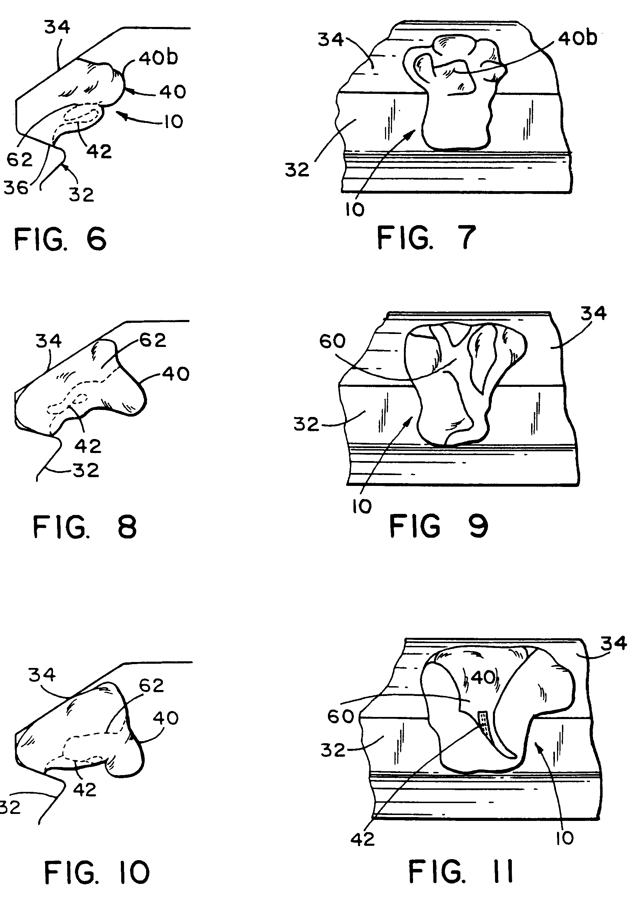

Figures **6-25** illustrate sequential deployment and inflation of the air bag **10**, as viewed from the side in the even numbered figures and from the front in the odd numbered figures. The Figures **6-25** were developed from time-sequence photographs of the deployment and inflation of the air bag **10.**

Figs. **6** and **7** illustrate the air bag **10** 14 milliseconds after the inflator module was activated to produce inflation gas. The air bag **10** has burst through the panel **36** of dashboard **32**, deployed upwardly along the window **34** and an upper portion **40b** of the frontal surface **40** has begun deploying toward the passenger occupant position, at a height substantially above the dashboard **32.** The upper portion of the bag, in the vicinity of **40b,** has also begun lateral expansion to provide a broad frontal surface. At this point, the bag material is relatively slack, and the exterior surface is somewhat bumpy, as the material is unevenly filled. This is also seen by the dotted line **62** which represents a vertical center line of the front panel material, stitched at **42.**

Figs. **8** and **9** illustrate deployment and inflation of the air bag at 16 milliseconds into the process. The frontal surface **40** has expanded downwardly, and is best seen in Fig. **8**, and has also expanded laterally, as best seen in Fig. **9**. With reference to Fig. **9,** a trough has begun to form in the central part of the frontal surface, as indicated at **60**, and relatively lumpy filling bubbles of slack material expand outwardly on either side of the trough **60**. In Fig. **8**, there is also shown schematically the believed location of the stitching **42** and, in dotted line **62**, the fabric extending from the stitching along the center line of the bag. The bag is still only partially inflated, and contact with a passenger would not be expected at this point.

With reference to Figs. **10** and **11**, the deployment and inflation is shown at 18 milliseconds after triggering of the inflation module. The frontal surface **40** continues to expand downwardly, and the center line material **62** becomes more taut. The trough **60** begins to open as the frontal surface **40** emerges, and the stitching **42** appears in the trough. Also, lateral expansion of the air bag **10** continues, along with the vertical expansion, in contrast to the air bag forming in an outwardly extending column.

Figs. **12** and **13** illustrate the extent of deployment at 21 milliseconds into the inflation process. The frontal surface **40** continues to expand downwardly, and lateral expansion continues as well. The center line material shown dotted line **62** is substantially taut, and the trough **60** becomes somewhat deeper as the material on either side of the taut center line material expands to the sides. However, the surfaces are still somewhat lumpy, because although a volume of inflation gas is present, inflation pressure has not built up inside the air bag **10**.

Figs. **14** and **15** illustrate the air bag at 23 milliseconds after triggering of the inflation module. At this point, a further elongated frontal surface **40** is forming, and a depending lobe portion of the bag is also becoming more prominent at **52**. The center line material **62** has become taut and "jerked" by the outwardly deploying bag, and the stitching **42** is partially broken away. With reference to Fig. **15,** the trough **60** has become localized, narrow and deep, indicating the retarding effect on the deployment of the centermost portion of the bag. Nevertheless, the bag has formed substantial lateral and vertical dimensions, again without excessive outward deployment.

Figs. **16** and **17** illustrate the deployment and inflation of the air bag at 25 milliseconds after triggering. At this point, it appears that the stitches **42** are tearing away, and more of the center line material **62** is free to deploy outwardly and fill in the front surface **40** of the air bag **10**. This is also seen in Fig. **17**, wherein the upper end of trough **60** is relaxed as the central panel material is released to come forward. The release also contributes to lateral expansion of the air bag **10**. At this point, depending upon the speed of the vehicle at the time of a crash and the rate of deceleration, contact with a passenger is possible. However, the air bag **10** is deployed with a good lateral and vertical dimension and is sufficiently inflated - with inflation continuing - to provide protection.

Figs. **18** and **19** illustrate deployment and inflation of the air bag **10** at 27 milliseconds after triggering of the inflation module. The stitching **42** is now fully broken away, and the center panel is free to deploy outwardly. The upper portion **40a** of the frontal surface **40** is enlarged vertically, and the material forming the trough **60** has relaxed and deployed forwardly. The depending lobe **52** also extends further downwardly, enlarging the vertical extent of the air bag. The dotted line **62** of the central material is shown assuming a more planer frontal surface, in effect catching up with the material on either side thereof.

With reference to Figs. **20** and **21,** the deployment and inflation process is shown at 30 milliseconds into the process. The air bag **10** has achieved additional volume, pursuant to the time of operation of the gas generator, and the air bag **10** assumes a more planer front surface **40** and an increasingly enlarged depending lobe **52.** The material in the vicinity of the trough **60** is substantially flattened, and is moving forward.

With reference to Figs. **22** and **23,** the air bag **10** is shown at 33 milliseconds after triggering of the inflation module. The front surface **40** has become more vertically elongated, and in particular has deployed outwardly toward the passenger opposite the dashboard **32.** The trough **60** has substantially smoothed out, and the air bag **10** has assumed a rounded configuration.

Figs. **24** and **25** illustrate the air bag **10** 36 milliseconds after triggering of the inflation module, at which time the air bag is substantially fully inflated. The air bag **10** has developed a vertically elongated front surface **40** and a depending lobe which extends well below the center of dashboard **32** and the inflater module mounted therein. The depending lobe **52** essentially fills the lap of the passenger so that the passenger's energy is spread over the largest possible surface of the air bag and passenger restraint and cushioning is maximized. In Figs. **24** and **25,** the material in the vicinity of the stitching **42** has fully deployed to the outermost surface of the air bag **10.**

In viewing Figs. **6-25** together, they illustrate a controlled deployment and shaping of the air bag **10,** wherein the air bag **10** does not form a column and extend outwardly beyond the final fully inflated position of Figs. **24** and **25.** Instead, the air bag **10** deploys outwardly to a limited extent and then develops a vertically elongated frontal surface and depending lobe as the air bag fills and becomes fully inflated and rounded. The rapid downward deployment of the vertical surface is very useful for passenger protection, in that the air bag is better positioned to receive not only the head but the upper torso of the passenger and to receive smaller passengers, including children.

As noted in the deployment and inflation of air bag **10** shown in Figs. **6-25,** the formation of the frontal surface rotates downwardly as the stitching limits the deployment of the central panel, thus encouraging the air bag to take its deployed shape and position in front of the passenger early in the inflation process. However, there are several other variables which affect the deployment. These include the time delay between the onset of a crash and triggering of the gas generator, the response and output of the gas generator, the location and orientation of the inflator module including the folded bag on the dashboard, and the dimensions of the vehicle. Desired operation can nevertheless be achieved by varying the location of the stitches, the stitch pattern, the number of stitches and the strength of the thread used for the stitches. Similarly, the air bag can be constructed of panels of different configurations, without altering the benefits achieved from releasably securing the front panel to the rear panel below the inlet opening.

In this regard, an air bag **70** is shown in fragmentary view in Fig. **26,** the air bag **70** having a central panel **72** and side panels **74** and **76.** Stitching **78** and **80** is applied to releasably secure the central panel **72** to itself below the inlet opening in a depending lobe portion of bag **70**. Stitches **78** are applied in nested "W" pattern within a circle **82**, the circle **82** constituting fine stitches sewing a circular reinforcement patch under the central panel **72.** Stitching **80** is applied in a zigzag pattern, also within circular stitching **84** securing a circular reinforcing patch to the back of front panel **72**.

Another air bag **100** according to the invention herein is shown in fragmentary view, partially cut away, in Fig. **27**. Air bag **100** comprises a central panel **102** and side panels **104** and **106,** connected at seams **105** and **107,** and has the general shape, including a depending lobe, of air bag **10.** A collar portion **108** of the air bag **100** defining its inlet opening includes a folded, stitched hem and openings for attaching the air bag to an inflator module, not shown.

Stitching generally indicated at **110** releasably secures the front panel **102** to itself, below the inlet opening. The stitching is provided in seven vertically elongated converging stitch lines **112**, which have their greater spacing at the end portion closer to the inlet opening, indicated at **114** in Fig. **27**. The stitches at end **114** of the stitch lines **112** are the first to release during the deployment and inflation process. The converging pattern of stitch lines **112** provides both a greater width of stitching at the area of first release and imparts non-parallel force vectors to the air bag material, to resist formation of stress risers that could result in fabric failure.

The stitch density at end **114** of the stitching **110** is increased by application of stitch line segments **116** interspersed between the stitch lines **112**. Six such stitch line segments are provided in the embodiment shown, the stitch line segments also have more stitches per unit length than the stitch lines **112**. Thus, "stitch density" as used herein means a greater number of stitches in a given area, whether achieved by application of more stitch lines, utilization of more stitches per unit length, or both. In the air bag **100**, the stitch lines **112** are approximately 25 cm (10 in) long with 2.0-2.8 stitches/cm (5-7 stitches/in), and the stitch line segments are approximately 2.5 cm (1 in) long with 3.1-3.9 stitches/cm (8-10 stitches/in). 41 Kg (90 lb) nylon thread is used for the stitches.

The air bag **100** is reinforced in the area of the breakaway stitches **110**. A first reinforcing patch is sewn to the inside of the front surface of central panel **102** by stitching **118** and although the patch is not seen, it is outlined by stitching **118**. A second reinforcing patch **120** is sewn by stitching **122** to the inside of central panel comprising the rear of the depending lobe. Reinforcing patch **120** extends to the collar **108**, thus provides a reinforced connection of the area of breakaway stitching with a mounting collar at the inflator module.

The additional stitch density at the area of stitching which first releases; resists premature separation of the releasably secured portions of the air bag, and insures downward rotation of the forming vertically elongated frontal surface before release of the lower frontal surface.

The air bags **10**, **70** and **100** shown and described herein are but some representations of possible stitch patterns and shapes and deployments of reinforcing patches. Although the invention contemplates locating the releasable stitching on the central panel of an air bag below the inlet opening, i.e., in the depending lobe area, alternate positions within that general vicinity may also be utilized to optimize performance for a given set of parameters.

## Claims

1. A vehicle occupant restraint system for mounting in a vehicle dashboard in front of a passenger position, the restraint system comprising:
a) an air bag (10) defining an inlet opening (26) and which, when inflated, provides a vertically elongated front surface (40);
b) the air bag, when inflated, including a depending lobe (52) extending downwardly with respect to the vehicle dashboard (32), a front surface of the depending lobe (52) forming a portion (38) of the vertically elongated front surface of the air bag, and a rear surface of the depending lobe (52) extending from the inlet opening (26) to a bottom of the depending lobe (52);
c) means (42) releasably connecting and securing an inside of a portion (38) of the air bag defining the vertically elongated front surface (40) to the inside of a portion (39) of the air bag (10) defining the rear surface of the depending lobe (52); and
(d) means (30) connected to the air bag at the inlet opening (26), for providing inflation gas; characterised in that:
the releasable securing means (42) permit inflation gas to flow to the depending lobe (52) prior to release of the releasable securing means (42) whereby the releasable securing means (42) limits outward deployment of the vertically elongated front surface (40) of the air bag during initial inflation of the air bag and releases upon partial deployment and inflation of the air bag.

2. A vehicle occupant restraint system as defined in claim 1 including a gas generator (30), the air bag comprising:
a) a central panel (20);
b) two substantially identical side panels (14) each having a depending lobe portion (52) which, when the air bag is inflated, extends downwardly with respect to the vehicle dashboard; wherein
c) each side panel (12, 14) has a marginal edge secured to a respective marginal edge (22, 24) of the central panel (20) to define the air bag;
d) the central panel (20) extends from the inlet opening (26) along top edges of the side panels (12, 14) to front edges of the side panels (12, 14), along the front edges of the side panels (12, 14) including front edges of the depending lobe portions (16, 18) of the side panels (12, 14) thereby providing the vertically elongated front surface (40) of the air bag, and along rear edges of the depending lobe portions (16, 18) to the inlet opening (26); and
e) a portion (38) of the central panel (20) between the front edge of the depending lobe portions (16, 18) of the side panels (12, 14) is releasably secured to a portion (39) of the central panel (20) between the rear edges of the depending lobe portions (16, 18) of the side panels (12, 14).

3. A vehicle occupant restraint system as defined in Claim 1 or 2 wherein the portions (38, 39) of the air bag releasably secured together are centered with respect to the width of the air bag.

4. A vehicle occupant restraint system as defined in any preceding claim wherein the releasably secured portions (38, 39) occupy less than half the width of the depending lobe (52).

5. A vehicle occupant restraint system as defined in any preceding claim wherein the inside of the portion (38) of the air bag defining the front surface (40) which is releasably secured (42) to the inside of the portion (39) of the air bag defining the rear surface of the depending lobe (52) comprises a portion of the air bag defining the front surface (40) of the depending lobe (52), and the releasable securing means (42) release the connected portions (38, 39) of the air bag so as to separate from the inlet opening (26) toward a bottom of the depending lobe (52).

6. A vehicle occupant restraint system as defined in any preceding claim wherein the releasable securing means (42) allows inflation gas to flow on either side thereof to begin inflation of a lower portion of the depending lobe (52).

7. A vehicle occupant restraint system as defined in any preceding claim wherein the releasable securing means (42) comprises breakaway stitching (42).

8. A vehicle occupant restraint system as defined in claim 7 wherein the stitch density in an area (114) of stitching which first releases is higher than the stitch density in an area which subsequently releases.

9. A vehicle occupant restraint system as defined in claim 7 or 8 wherein the breakaway stitching (42) is applied in multiple stitch lines.

10. A vehicle occupant restraint system as defined in claim 9 wherein the multiple stitch lines (42) are generally vertically oriented.

11. A vehicle occupant restraint system as defined in claim 9 or 10 wherein the stitch lines are provided in elongated converging lines (112) with greater lateral spacing between the lines in the area (114) of stitching which first releases.

12. A vehicle occupant restraint system as defined in claim 11 wherein the stitch density in the area (114) of stitching which first releases is increased by additional stitch line segments (116) interspersed between the greater laterally spaced end portions of the elongated converging stitch lines (112).

13. A vehicle occupant restraint system as defined in any one of claims 7 to 12 wherein the air bag is reinforced in the portions (38, 39) connected by the breakaway stitching (42).

14. A vehicle occupant restraint system as defined in claim 13 wherein the air bag is reinforced by patches (46, 48) of material positioned between the connected portions of the air bag.

15. A vehicle occupant restraint system as defined in claim 14 wherein one of the patches (48) of reinforcing material is secured to inside of the portion (39) of the air bag defining the rear surface of the depending lobe (52) and extends to and is secured at the inlet opening (26).

16. A vehicle occupant restraint system as defined in any preceding claim wherein the releasable securing means (78, 80) are applied at spaced-apart portions (80, 82) of the air bag.

## Patentansprüche

1. Fahrzeuginsassenrückhaltesystem zur Anordnung in einem Fahrzeugarmaturenbrett vor einer Beifahrerposition mit
a) einem Airbag (10), der eine Einlaßöffnung (26) begrenzt und, wenn er aufgeblasen ist, eine vertikal verlängerte Vorderfläche (40) liefert,
b) dem Airbag, der nach dem Aufblasen einen daran hängenden Zipfel (52) einschließt, der sich in bezug auf das Fahrzeugarmaturenbrett (32) abwärts erstreckt, wobei eine Vorderfläche des daranhängenden Zipfels (52) einen Teil (38) der vertikal verlängerten Vorderfläche des Airbags bildet, und sich eine hintere Fläche des daranhängenden Zipfels (52) von der Einlaßöffnung (26) bis zu einem Boden des daranhängenden Zipfels (52) erstreckt,
c) Einrichtungen (42), die eine Innenseite eines Teils (38) des Airbags, der die vertikal verlängerte Vorderfläche (40) begrenzt, mit der Innenseite eines Teils (39) des Airbags (10), der die hintere Fläche des daranhängenden Zipfels (52) begrenzt, lösbar verbindet und daran befestigt, und
d) Einrichtungen (30), die mit dem Airbag an der Einlaßöffnung (26) verbunden sind, um Aufblasgas zu liefern,
**dadurch gekennzeichnet**, daß die lösbaren Befestigungseinrichtungen (42) es zulassen, daß Aufblasgas zu dem daranhangenden Zipfei (52) strömt, bevor sie die lösbaren Befestigungseinrichtungen (42) lösen, wodurch die lösbaren Befestigungseinrichtungen (42) die Entfaltung der vertikal verlängerten Vorderfläche (40) des Airbags nach außen während des anfänglichen Aufblasens des Airbags begrenzen und nach Teilentfaltung und -aufblasen des Airbags lösen.

2. Fahrzeuginsassenrückhaltesystem nach Anspruch 1 mit einem Gasgenerator (30), wobei der Airbag
a) ein mittleres Feld (20),
b) zwei im wesentlichen identische Seitenfelder (14), von denen jedes einen daranhängenden Zipfelteil (52) hat, welcher, wenn der Airbag aufgeblasen ist, sich abwärts in bezug auf das Fahrzeugarmaturenbrett erstreckt, umfaßt, worin
c) jedes Seitenfeld (12, 14) eine an einer jeweiligen Randkante (22, 24) des mittleren Feldes (20) befestigte Randkante hat, um den Airbag zu begrenzen,
d) das mittlere Feld (20) sich von der Einlaßöffnung (26) entlang Oberkanten der Seitenfelder (12, 14) zu Vorderkanten der Seitenfelder (12, 14) entlang den Vorderkanten der Seitenfelder (12, 14) einschließlich Vorderkanten der daranhängenden Zipfelabschnitte (16, 18) der Seitenfelder (12, 14), um dabei die vertikal verlängerte Vorderfläche (40) des Airbags zu ergeben, und entlang den Hinterkanten der daranhängenden Zipfelteile (16, 18) zu der Einlaßöffnung (26) erstreckt und
e) ein Teil (38) des mittleren Feldes (20) zwischen der Vorderkante der daranhängenden Zipfelteile (16, 18) der Seitenfelder (12, 14) lösbar an einem Teil (39) des mittleren Feldes (20) zwischen den Hinterkanten der daranhängenden Zipfelteile (16, 18) der Seitenfelder (12, 14) befestigt ist.

3. Fahrzeuginsassenrückhaltesystem nach Anspruch 1 oder 2, bei dem die Teile (38, 39) des Airbags, die lösbar aneinander befestigt sind, in bezug auf die Breite des Airbags mittig angeordnet sind.

4. Fahrzeuginsassenrückhaltesystem nach einem der vorausgehenden Ansprüche, bei dem die lösbar befestigten Teile (38, 39) weniger als die Hälfte der Breite des daranhängenden Zipfels (52) einnehmen.

5. Fahrzeuginsassenrückhaltesystem nach einem der vorausgehenden Ansprüche, bei dem die Innenseite des Teils (38) des Airbags, der die Vorderfläche (40) begrenzt, welche lösbar (42) an der Innenseite des Teils (39) des Airbags, der die hintere Fläche des daranhängenden Zipfels (52) begrenzt, befestigt ist, einen Teil des Airbags umfaßt, der die Vorderfläche (40) des daranhängenden Zipfels (52) begrenzt und die lösbaren Befestigungseinrichtungen (42) die verbundenen Teile (38, 39) des Airbags so lösen, daß sie sich von der Einlaßöffnung (26) zu einem Boden des daranhängenden Zipfels (52) hin trennen.

6. Fahrzeuginsassenrückhaltesystem nach einem der vorausgehenden Ansprüche, bei dem die lösbaren Befestigungseinrichtungen (42) es gestatten, daß Aufblasgas auf jeder ihrer Seiten strömt, um das Aufblasen eines unteren Abschnittes des daranhängenden Zipfels (52) zu beginnen.

7. Fahrzeuginsassenrückhaltesystem nach einem der vorausgehenden Ansprüche, bei dem die lösbaren Befestigungseinrichtungen (42) eine Abreißnaht (42) umfassen.

8. Fahrzeuginsassenrückhaltesystem nach Anspruch 7, bei dem die Nadelstichdichte in einem Bereich (114) der Naht, welcher sich zuerst löst, höher als die Nadelstichdichte in einem Bereich ist, der sich anschließend löst.

9. Fahrzeuginsassenrückhaltesystem nach Anspruch 7 oder 8, bei dem die Abreißnaht (42) in mehreren Nadelstichlinien angebracht ist.

10. Fahrzeuginsassenrückhaltesystem nach Anspruch 9, bei dem die mehrfachen Nadelstichlinien (42) allgemein vertikal ausgerichtet sind.

11. Fahrzeuginsassenrückhaltesystem nach Anspruch 9 oder 10, bei dem die Nadelstichlinien in länglichen konvergierenden Linien (112) mit größerem seitlichem Abstand zwischen den Linien in dem Nahtbereich (140), welcher sich zuerst löst, vorgesehen sind.

12. Fahrzeuginsassenrückhaltesystem nach Anspruch 11, bei dem die Nadelstichdichte in dem Nahtbereich (114), der sich zuerst löst, durch zusätzliche Nadelstichliniensegmente (116) erhöht ist, die zwischen den größeren seitlich beabstandeten Endabschnitten der länglichen konvergierenden Nadelstichlinien (112) eingestreut sind.

13. Fahrzeuginsassenrückhaltesystem nach einem der Ansprüche 7 bis 12, bei dem der Airbag in den Abschnitten (38, 39), die durch die Wegreißnaht (42) verbunden sind, verstärkt ist.

14. Fahrzeuginsassenrückhaltesystem nach Anspruch 13, bei dem der Airbag durch Materialflicken (46, 48) verstärkt ist, die zwischen den verbundenen Abschnitten des Airbags angeordnet sind.

15. Fahrzeuginsassenrückhaltesystem nach Anspruch 14, bei dem einer der Flicken (48) aus Verstärkungsmaterial an der Innenseite des Teils (39) des Airbags befestigt ist, der die hintere Fläche des daranhängenden Zipfels (52) definiert, und sich zu der Einlaßöffnung (26) erstreckt und dort befestigt ist.

16. Fahrzeuginsassenrückhaltesystem nach einem der vorausgehenden Ansprüche, bei dem die lösbaren Befestigungseinrichtungen (78, 80) in einander beabstandeten Bereichen (80, 82) des Airbags angebracht sind.

## Revendications

1. Système de retenue d'occupant du véhicule destiné à être monte dans un tableau de bord du véhicule devant une position de passager, le système de retenue comprenant :
a) un coussin gonflable (10) définissant une ouverture d'entrée (26) et qui, lorsqu'il est gonflé, forme une surface avant (40) allongée dans la direction verticale ;
b) le coussin gonflable, lorsqu'il est gonflé, comprenant un lobe pendant (52) qui s'étend vers le bas par rapport au tableau de bord (32) du véhicule, une surface avant du lobe pendant (52) formant une portion (38) de la surface avant allongée verticalement du coussin gonflable, et une surface arrière du lobe pendant (52) s'étendant de l'ouverture d'entrée (26) jusqu'au fond du lobe pendant (52) ; et
c) des moyens (42) qui relient et fixent de façon détachable une face intérieure d'une portion (38) du coussin gonflable qui définit la surface avant allongée verticalement (40) à la face intérieure d'une portion (39) du coussin gonflable qui définit la surface arrière du lobe pendant (52) ; et
d) des moyens (30) reliés au coussin gonflable au droit de l'ouverture d'entrée (26) et destinés à fournir le gaz de gonflage ;
caractérisé en ce que :
les moyens de fixation détachables (42) permettent au gaz de gonflage de s'écouler vers le lobe pendant (52) avant que les moyens de fixation détachables (42) ne se détachent, de sorte que les moyens de fixation détachables (42) limitent le déploiement vers l'extérieur de la surface avant allongée verticalement (40) du coussin gonflable pendant le gonflage initial du coussin gonflable et se détachent en réponse au déploiement partiel et au gonflage partiel du coussin gonflable.

2. Système de retenue d'occupant de véhicule selon la revendication 1, comprenant un générateur de gaz (30), le coussin gonflable comprenant :
a) un panneau central (20) ;
b) deux panneaux latéraux (14) sensiblement identiques dont chacun possède une portion de lobe pendant (52) qui, lorsque le coussin gonflable est gonflé, s'étend vers le bas par rapport au tableau de bord du véhicule ; dans lequel
c) chaque panneau latéral (12, 14) présente un bord marginal fixé à un bord marginal respectif (22, 24) du panneau central (20) pour définir le coussin gonflable ;
d) le panneau central (20) s'étend de l'ouverture d'entrée (26), le long des bords supérieurs des panneaux latéraux (12, 14), jusqu'aux bords avant des panneaux latéraux (12, 14), le long des bords avant des panneaux latéraux (12, 14), y compris les bords avant des portions de lobes pendants (16, 18) des panneaux latéraux (12, 14), en formant ainsi la surface avant allongée verticalement (40) du coussin gonflable, et le long de bords arrière des portions de lobes pendants (16, 18) jusqu'à l'ouverture d'entrée (26) ; et
e) une portion (38) du panneau central (20) comprise entre le bord avant des portions de lobes pendants (16, 18) des panneaux latéraux (12, 14) est fixée de façon de détachable à une portion (39) du panneau central (20) entre les bords arrière des portions de lobes pendants (16, 18) des panneaux latéraux (12, 14).

3. Système de retenue d'occupant de véhicule selon la revendication 1 ou 2, dans lequel les portions (38, 39) du coussin gonflable qui sont fixées l'une à l'autre de façon détachable sont centrés par rapport à la largeur du coussin gonflable.

4. Système de retenue d'occupant de véhicule selon une quelconque des revendications précédentes, dans lequel les portions (38, 39) fixées de façon détachable occupent moins de la moitié de la largeur du lobe pendant (52).

5. Système de retenue d'occupant de véhicule selon une quelconque des revendications précédentes dans lequel la face intérieure de la portion (38) du coussin gonflable qui définit la surface avant (40) qui est fixée de façon détachable (42) à la face intérieure de la portion (39) du coussin gonflable qui définit la surface arrière du lobe pendant (52) comprend une portion du coussin gonflable qui définit la surface avant (40) du lobe pendant (52), et les moyens de fixation détachables (42) détachent les portions assemblées (38, 39) du coussin gonflable, de manière qu'elles se séparent en partant de l'ouverture d'entrée (26) et en se dirigeant vers le fond du lobe pendant (52).

6. Système de retenue d'occupant de véhicule selon une quelconque des revendications précédentes, dans lequel les moyens de fixation détachables (42) permettent au gaz de gonflage de s'écouler de part et d'autre de ces moyens pour commencer à gonfler une portion inférieure du lobe pendant (52).

7. Système de retenue d'occupant de véhicule selon une quelconque des revendications précédentes, dans lequel les moyens de fixation détachables (42) comprennent une couture (42) pouvant se rompre.

8. Système de retenue d'occupant de véhicule selon la revendication 7, dans lequel la densité des points dans une région (114) de la couture qui se détache en premier lieu est plus grande que la densité des points dans la région qui se détache par la suite.

9. Système de retenue d'occupant de véhicule selon la revendication 7 ou 8, dans lequel la couture (42) capable de se rompre est réalisée en lignes de points multiples.

10. Système de retenue d'occupant de véhicule selon la revendication 9, dans lequel les lignes de points multiples (42) sont orientés dans une direction générale verticale.

11. Système de retenue d'occupant de véhicule selon la revendication 9 ou 10, dans lequel les lignes de points sont prévues en lignes allongées convergentes (112) présentant un plus grand espacement latéral entre lignes dans la région (114) de la couture qui se détache en premier lieu.

12. Système de retenue d'occupant de véhicule selon la revendication 11, dans lequel la densité des points dans la région (114) de la couture qui se détache en premier lieu est augmentée par des segments additionnels de lignes de couture (116) intercalés entre les portions d'extrémité, plus largement espacées latéralement, des lignes de couture convergentes allongées (112).

13. Système de retenue d'occupant de véhicule selon une quelconque des revendications 7 à 12, dans lequel le coussin gonflable est renforcé dans les portions (38, 39) assemblé par la couture (42) capable de se rompre.

14. Système de retenue d'occupant de véhicule selon la revendication 13, dans lequel le coussin gonflable est renforcé par des morceaux de matière (46, 48) placés entre les portions reliées du coussin gonflable.

15. Système de retenue d'occupant de véhicule selon la revendication 14, dans lequel l'un des morceaux (48) de matière de renforcement est fixé à la face intérieure de la portion (39) du coussin gonflable qui définit la surface arrière du lobe pendant (52), et s'étend jusqu'à l'ouverture d'entrée (26) et est fixé à celle-ci.

16. Système de retenue d'occupant de véhicule selon une quelconque des revendications précédentes, dans lequel les moyens de fixation détachables (78, 80) sont prévus dans des portions espacées (80, 82) du coussin gonflable.
